Europäisches Patentamt

(19) European Patent Office

Office européen des brevets

(11) **EP 0 816 874 A1**

## (12) EUROPEAN PATENT APPLICATION
published in accordance with Art. 158(3) EPC

(43) Date of publication:
07.01.1998 Bulletin 1998/02

(21) Application number: 97900431.4

(22) Date of filing: 17.01.1997

(51) Int. Cl.$^6$: **G02B 1/10**

(86) International application number:
PCT/JP97/00072

(87) International publication number:
WO 97/26566 (24.07.1997 Gazette 1997/32)

(84) Designated Contracting States:
DE FR GB

(30) Priority: 18.01.1996 JP 24633/96
18.01.1996 JP 24634/96
18.01.1996 JP 24637/96

(71) Applicant:
TOYO METALLIZING CO.,LTD.
Tokyo 103 (JP)

(72) Inventors:
• TOHYAMA, Shunroku
Mishima, Shizuoka 411 (JP)
• MOCHIZUKI, Kiyohito
Tagata-gun, Shizuoka 419-01 (JP)
• AOYAGI, Tsutomu
Machida-shi, Tokyo 195 (JP)

(74) Representative:
Coleiro, Raymond et al
MEWBURN ELLIS
York House
23 Kingsway
London WC2B 6HP (GB)

(54) **PLASTIC OPTICAL ARTICLE HAVING MULTI-LAYERED ANTIREFLECTION FILM**

(57)     Disclosed is a plastic-made optical article having a multi-layer anti-reflection film which is attached to various displays and has a sufficient anti-reflection ability required for the purpose of use, and which, on an economical aspect, enables low-cost production of the entire apparatus.

A plastic-made optical article having a multi-layer anti-reflection film according to the present invention is a plastic film or sheet wherein an anti-reflection film having a multi-layer film structure having three or more layers is formed in a surface layer of on one side or both sides thereof, and wherein at least two layers that do not neighbor each other are formed of ITO.

EP 0 816 874 A1

**Description**

<u>TECHNICAL FIELD</u>

The present invention relates to an optical article with a good anti-reflection ability which is mounted on a front surface, such as a display screen of a liquid crystal display (LCD), a Braun tube (cathode ray tube, that is, CRT) for a television or a computer, and the like, to effectively block or leak electromagnetic waves or static electricity generated by such a apparatus. That is, the present invention relates to a plastic optical article which prevents damages to health caused by electromagnetic waves when a person works in front of such an apparatus, and which minimizes deposition of dust or the like caused by electrostatic charges, and which has a sufficient anti-reflection ability to prevent light from various light sources behind an operator from reflecting from the display screen into the operator's eyes and, thereby, prevent what is displayed from becoming difficult to see, and which is resistant to scratching and resistant to staining caused by various substances in living environments.

More particularly, the present invention relates to a plastic-made optical article having a multi-layer anti-reflection film with a high anti-reflection ability such that the reflectivity is small over a wide visible light range, more specifically, such that a visible light wave range band in which the reflectivity of the anti-reflection film surface is equal to or less than 1% is equal to or greater than 150 nm.

Furthermore, the present invention relates to a plastic-made anti-reflection optical article which is good in adhesion to a display surface and easy to mount, and which has a good peelability after being adhered, and which is good in durability of the anti-reflection ability, that is, a primary object of the invention.

<u>BACKGROUND ART</u>

Normally, it is often the case where the display screen of a liquid crystal display (LCD) and a Braun tube (CRT) of a television or a computer is made of glass. It has been a conventional practice to provide the glass surface with an anti-reflection ability in order to avoid problems caused by reflection of light from behind. However, an anti-reflection film production method wherein a multi-layer film of a metal oxide, a dielectric and the like is formed by vapor deposition in a high-degree vacuum as indicated below, on the glass surface of a CRT or the like having a curved surface and a size of several dozen cm x several dozen cm, requires a large scale equipment and, therefore, is not favorable in cost effectiveness. With such circumstances, a method has been employed wherein a plastic film having an anti-reflection ability is prepared and attached to a display glass surface. However, since a plastic film is used, it is necessary to provide measures for improvements in surface quality such that the surface becomes resistant to scratching and for minimization of static electrification.

Japanese patent application laid-open No. Sho 62-178901 proposes an optical article wherein a hard coat layer having an anti-scratch property is provided on a transparent plastic film, and an anti-reflection film formed of four layers of specific oxides is provided on a surface layer of the hard coat layer. However, this has not been put into a design that has take into account the prevention of static electrification or electromagnetic wave shield.

Japanese patent application laid-open No. Sho 60-144702 proposes a multi-layer anti-reflection film in an optical device formed by first forming a surface cured coating on a surface of a synthetic resin substrate and then forming a multi-layer anti-reflection film on the surface cured coating, wherein the innermost layer of the multi-layer anti-reflection film is formed of a mixture containing yttrium oxide and zirconium oxide, and the outermost layer is formed of a silicon dioxide film. This multi-layer anti-reflection film is intended to optimize the compatibility between the resistance to scratching and the anti-reflection ability. However, this has not been put into a design that has take into account the prevention of static electrification or electromagnetic wave shield, either.

Japanese patent application laid-open No. Sho 61-245449 proposes a light transmitting plate wherein a hard coat layer is provided on a plastic substrate, and an electrically conductive layer is provided thereon, and a layer having a refractivity lower than the refractivity of the electrically conductive layer is provided thereon. However, this example is an anti-reflection film formed of three layers including the electrically conductive layer wherein the reflectivity at two end wavelength ranges of visible light rays excluding a central wavelength range is extremely high. Thus, it is extremely unsatisfactory as an anti-reflection film optical article.

Japanese patent application laid-open No. Hei 6-130204 proposes a light transmitting plate wherein a hard coat layer is provided on a heat-resistant plastic transparent substrate, and a multi-layer anti-reflection layer including an electrically conductive transparent layer is provided thereon, and proposes a method for producing a multi-layer anti-reflection light transmitting plate wherein the outermost layer thereof has a lower refractivity than the hard coat layer, and the electrically conductive transparent layer is disposed inwardly of the anti-reflection layer. The laid-open application discloses production wherein the entire multi-layer anti-reflection layer is produced by vacuum vapor deposition. Therefore, it is necessary that the substrate be a heat-resistant plastic. The laid-open application merely points out that a heat-resistant plastic be a material having a thermal deformation temperature of 120°C, more specifically, merely describes an embodiment wherein polycarbonate is used. In this example, too, the anti-reflection film provided on the hard coat layer is formed of three or four layers. As in Japanese patent application laid-open No. Hei 61-245449, the reflectivity in wavelength ranges on both sides of a main wavelength around 500 nm is high, and the visible light wavelength range band in which the reflectivity of the anti-reflection film is equal to or less than 1 % is about 130 nm in all the embodiments. Thus, this disclosed technology is extremely unsatisfactory as an anti-reflection film optical article.

Japanese patent application laid-open No. Hei 2-239201 proposes a multi-layer anti-reflection film formed of six layers including at least one electrically conductive transparent layer and provided on a surface of an optical component part, such as a glass part, a lens or the like, the multi-layer anti-reflection film having a specific construction wherein the first layer is formed of a silicon dioxide, the second layer is formed of aluminum oxide, the third layer is an electrically conductive transparent layer formed of tin and indium-oxide, the fourth layer is formed of aluminum oxide, the fifth layer is formed of zirconium oxide, and the sixth layer is formed of magnesium fluoride. This multi-layer anti-reflection film is intended to prevent water condensation due to environmental changes on a lens or the like and, at the same time, prevent light reflection, by supplying electric current to the electrically conductive transparent layer. The six-layer construction is needed in order to obtain a sufficiently high anti-reflection ability. The laid-open application provides a multi-layer anti-reflection layer wherein the visible light wavelength range band in which the reflectivity on the anti-reflection film surface is equal to or less than 1 % is 380 nm, that is, the entire range of visible light wavelength (400-780 nm). However, provision of such a multi-layer film of six or more layers using five kinds of compounds commensurates with a camera lens or the like that requires a high performance. It should be needless to point out that it is difficult to apply such a multi-layer anti-reflection film to a case where cost effectiveness is pursued, as in the object of the present invention, by, instead of forming an anti-reflection film in multi-layers directly on a glass member, forming an anti-reflection film separately on a plastic film in a more economical production method, and attaching it over the entire glass surface of an apparatus, such as a CRT, an LCD or the like.

Conventional plastic-made optical articles having a multi-layer anti-reflection film has a low adhesiveness to glass or high-molecular resins such as polyester, polycarbonate, polyacetate, polymethacrylic resin and the like, which are surface materials of the screens of normal display apparatuses. No effective method for improving the adhesion has not been proposed yet.

DISCLOSURE OF THE INVENTION

It is an object of the present invention to provide a plastic-made optical article having a multi-layer anti-reflection film which solves the problems in the performance and quality of the various conventional technologies, and which is attached to various displays and has a sufficient anti-reflection ability required for the purpose of use, and which, on an economical aspect, enables low-cost production of the entire apparatus.

That is, a plastic-made optical article having a multi-layer anti-reflection film intended by the present invention is required to have the following features and meet the following performance and quality requirements:

(1) The visible light wavelength range band over which the reflectivity of the anti-reflection film surface is equal to or less than 1 % is sufficiently wide, that is, at least 150 nm.
(2) The film has a high electric conductivity and blocks electric magnetic waves generated by a display, and creates no danger of damaging the health of an operator in front of the display. Static electrification in surface is low so that deposition of dust or the like on the surface is small. Preferably,
(3) The surface is resistant to scratching. More specifically, the surface has a pencil hardness of 2H or higher. Desirably, the surface is resistant to staining by various commodities such as tea, lipsticks, felt pen inks and the like.

Another object of the present invention is to provide a plastic-made optical article which is good in adhesion to a display surface and easy to attach thereto, and which has a multi-layer anti-reflection film with a highly durable anti-reflection property such that the anti-reflection ability, which is the object of the invention, will not deteriorate and peeling will not occur after adhesion.

The object of the present invention is achieved by a plastic-made optical article which is a plastic film or sheet wherein an anti-reflection film having a multi-layer film structure having three or more layers is formed in a surface layer of one side or both sides thereof, and wherein at least two layers that do not neighbor each other are formed of ITO (mixture of $In_2O_3$ and $SnO_2$).

In the plastic-made optical article having a multi-layer anti-reflection film as described above, it is preferable that a surface layer of one side or both sides of a plastic film or sheet substrate be provided with the following layers formed sequentially in the order from the substrate side toward the surface:

first layer--layer containing ITO (mixture of $In_2O_3$ and $SnO_2$) as a main component;
second layer--layer containing $SiO_2$ as a main component;

third layer--layer containing ITO as a main component; and

fourth layer--layer containing SiO$_2$ as a main component,

and that the visible light wavelength range band in which the reflectivity of the anti-reflection film surface is equal to or less than 1 % be equal to or greater than 150 nm.

Further, in the plastic-made optical article having the above-described multi-layer anti-reflection film, it is preferable that the optical film thicknesses of the first to fourth layers ($n_i \times d_i$ where i = 1-4, $n_i$ is the refractivity of the i-th layer, and $d_i$ = the thickness of the i-th layer) be as follows:

$$0.04\lambda_0 < n_1 d_1 < 0.15\lambda_0$$

$$0.02\lambda_0 < n_2 d_2 < 0.10\lambda_0$$

$$0.10\lambda_0 < n_3 d_3 < 0.30\lambda_0$$

$$0.10\lambda_0 < n_4 d_4 < 0.30\lambda_0$$

where $\lambda_0$ is the designed wavelength ( $\lambda_0$ = 450-600 nm).

The aforementioned other object of the present invention has been achieved by a plastic-made optical article having a multi-layer anti-reflection film characterized in that an anti-reflection film is formed on one side surface of a film substrate sheet of 50-250 $\mu$m in thickness formed from a resin containing polyethylene terephthalate as a main component, and that a readily adhering layer of 0.1-2 $\mu$m in thickness is formed on the other side surface.

In the plastic-made optical article having the multi-layer anti-reflection film of the present invention, it is preferable that a protection film peelable for use be provided on the readily adhering layer.

## BEST MODE FOR CARRYING OUT THE INVENTION

As the plastic film or sheet substrate in the present invention, any film or sheet substrate may be used as long as it has a transparency to transmit visible light, and carries on its surface a metal oxide placed by means of vapor deposition or the like for forming an anti-reflection film and a hard coat layer as described above, and has thermal, mechanical and configurational stability to such an extent that it can withstand in the process of adhering it to a display front surface. Specifically, films or sheets of about 50-250 $\mu$m in thickness formed of polyolefin-based resin, polymethacrylic acid-based resin, polyester-based resin, polycarbonate-based resin, triacetate-based resin and the like, may be cited. Among these, polyester-based resin, more particularly, resin mainly made from polyethylene terephthalate, may preferably be used in view of balance between the thermal, mechanical and configurational stability and cost effectiveness. In some cases, such a film or sheet colored by polymer compounding or dyeing may preferably be used within a range such that the visible light transmittance is acceptable, taking into consideration the purpose of use of displays or the design aspect.

If the product according to the present invention is to be attached to a display, it is a normal practice to form an anti-reflection film on one side surface of the product and place the opposite side surface in close contact with a display for use. Therefore, it is desirable to perform a chemical or physical surface treatment (coating, corona discharge treatment, or the like) in order to improve the adhesion between the joining surfaces.

The hard coat layer serves to reduce occurrence of flaws on the surface of a product according to the present invention caused by contact with articles (the tip of a pencil, a mechanical pencil or the like, a nail) which are not essential when a display is being used, or friction when the surface is wiped for cleaning. Although there are various methods for expressing surface hardness, the pencil hardness may conveniently be used. The hard coat layer needs to have a pencil hardness of at least 2H. The anti-reflection film of the present invention formed by various oxides as described below is, essentially, sufficiently hard. However, since the total thickness thereof is at most 0.5 $\mu$m in a typical example where the film is formed by four layers, it is hardly effective against the aforementioned various flaw causes in a case where a plastic layer normally having a low hardness and a thickness of at least 20 $\mu$m is provided as a substrate under the film. Due to the principle of prevention of reflection, it is impossible to provide the hard coat layer needing a considerable thickness to achieve the effect of flaw prevention, on the outside surface of the anti-reflection film. Therefore, the hard coat layer is provided between the film substrate and the anti-reflection film. The hard coat layer normally needs to have a thickness of 1 m$\mu$ or greater as a minimum thickness to achieve a surface hardness that significantly withstands flawing. An excessive thickness of the hard coat layer will likely sacrifice flexibility or cause problems in optical characteristics. A preferable thickness is 15 $\mu$m or less. It should be apparent that the hard coat layer needs to have scratch resistance.

The chemical composition of the hard coat layer may be either an organic acryl-based composition or an inorganic oxide-based composition such as polyorganosiloxane, silica, alumina and the like. As a film forming method for the hard coat layer, any of the vacuum vapor deposition methods and normally employed methods of solution application/drying, so-called wet coating methods, may be used. However, since a thickness of 1 μm or greater is normally needed as described above, a wet coating method is more preferable. If a wet coating method is employed, an organic acryl-based composition may be readily selected. It is preferable to use a method wherein a film is formed by crosslinking an ester compound formed by an acrylic compound, such as a methacrylic acid, and a polyfunctional glycol.

It is preferable to provide a thin anchor coat layer of about 2 μm or less in order to enhance the adhesion between the hard coat layer and the substrate film. In such a case, it is desirable that the anchor coat layer be provided by an in-line method or an off-line method during production of the substrate film using an acryl-based or polyester-based resin.

The formation of the multi-layer anti-reflection film will next be described. The principle and film forming method of a normal multi-layer anti-reflection film is known, and various methods and embodiments have been introduced in accordance with various purposes as described above. Basically, a transparent compound having a refractivity lower than the refractivity of the substrate film and, in the present invention, the substrate film that includes an anchor coat layer and a hard coat layer, and a transparent compound having a refractivity greater than the refractivity of the substrate film are formed into optical film thicknesses (multiplication product of the refractivity n and absolute thickness d) designed so that the total refractivity becomes a value approximate to a local minimum. The specific construction of the multi-layers differs depending on the purpose of use, the acceptable cost for production and the film forming method employable for production.

One of the major gists of the present invention is to completely eliminate the danger of damages to the health of display operators by providing sufficiently high electric conductivity and anti-reflection property.

An important concept of the present invention is to dispose two layers containing ITO as a main component so that they do not neighbor each other, and, in a 4-layers construction, they compose the first layer and the third layer, in order to achieve compatibility between electric conduction and low reflection by economical and most practical measures. In a design simply from the reflection aspect, ITO is selected not necessarily from the view of the refractivity (about 2.0). Normally, ITO, that is, a mixture of tin oxide and indium oxide, having a tin oxide content proportion of 5-20% may preferably be used in view of balance between transparency and electric conduction. Although a greater thickness of the ITO layer is more preferable in view of electric conductivity, the thickness of the ITO layer must be approximate to a specific thickness (not necessarily a single value) required for wavelengths concerned, based on an optical theory. In any way, by providing two ITO layers apart from each other, a sufficiently high electric conductivity is achieved. Further, a construction wherein electrically conductive ITO layers are provided in two ITO layers apart from each other is very suitable since it becomes possible to lead electrodes for grounding out of either one of the two layers or both layers, thereby enabling reliable grounding with a low resistance.

The present invention provides, more specifically, the following multi-layer anti-reflection film in accordance with the purpose of use as described above.

(1) A multi-layer anti-reflection film wherein a surface layer of one side or both sides of a plastic film or sheet substrate are provided with the following layers formed sequentially in the order from the substrate side toward the surface:

first layer--layer containing ITO (mixture of $In_2O_3$ and $SnO_2$) as a main component;
second layer--layer containing $SiO_2$ as a main component;
third layer--layer containing ITO as a main component; and
fourth layer--layer containing $SiO_2$ as a main component,

and wherein the visible light wavelength range band in which the reflectivity of the anti-reflection film surface is equal to or less than 1 % is equal to or greater than 150 nm.

(2) A multi-layer anti-reflection film as described in (1) characterized in that the optical film thicknesses of the first to fourth layers ($n_i \times d_i$ where i = 1-4, $n_i$ is the refractivity of the i-th layer, and $d_i$ = the thickness of the i-th layer) are as follows:

$$0.04\lambda_0 < n_1d_1 < 0.15\lambda_0$$

$$0.02\lambda_0 < n_2d_2 < 0.10\lambda_0$$

$$0.10\lambda_0 < n_3d_3 < 0.30\lambda_0$$

$$0.10\lambda_0 < n_4d_4 < 0.30\lambda_0$$

where $\lambda_0$ is the designed wavelength ($\lambda_0$ = 450-600 nm).

The multi-layer anti-reflection film (1) achieves a high anti-reflection property and an electric conductivity, using only the two substances ITO and $SiO_2$. This feature provides great industrial advantages if all the four layers of the multi-layer anti-reflection film are formed by a vapor deposition method employing an electron beam heating method. Normally, it is possible to increase the wavelength range band in which the reflectivity is low and achieve a reflectivity value approximate to zero by increasing the number of layers of the multi-layer, as described above. As the anti-reflection film construction acceptable for the purpose of use according to the present invention, a multi-layer film construction having three or more layers, or a three-layers or four-layers construction composed of as few kinds of constituting compounds, that is, vapor deposition substances, as possible, desirably composed of two kinds, is preferably employed. Reduction of the number of kinds of vapor deposition substances to as small a number as possible becomes a significant advantage particularly if the multi-layer anti-reflection film is continuously formed simultaneously with the running of the film. That is, if a wind-out system wherein a material film is wound in a roll and a wind-up system for a multi-layer anti-reflection film are provided in a vacuum vapor deposition film forming apparatus, and one or a plurality of vapor deposition steps are provided therebetween, it becomes possible to form films in a multi-layer state without releasing the vacuum system to the normal pressure, thus providing a rational production process. If there is only one location for the vapor deposition step, the film running needs only to be performed at most five time in total in the forward and backward directions. Since two to three layers can easily be formed using two to three vapor deposition substances through a single run one way (forward or backward), it is possible to form four layers through one reciprocation movement.

The multi-layer anti-reflection film (2) provides a specific design for achieving a high anti-reflection property.

In the plastic film having an anti-reflection film according to the present invention, the adhesion between the reverse surface of the plastic film on which the anti-reflection film is not formed and the surface material of an LCD or a CRT becomes an important problem since attachment of the plastic film to the front surface of the LCD or CRT for use is a gist of the present invention. As a result of considerations in various respects, it has been found that it is most preferable to provide a readily adhering layer having a specific chemical composition and property and having an appropriate thickness, on the reverse surface of the anti-reflection film of the plastic film on which the multi-layer anti-reflection film is not formed, and to adhere the readily adhering layer surface to the surface material of the LCD or CRT using a transparent adhesive in order to achieve good adhesion to surfaces of various high-molecular resins, such as glass, polyester, polycarbonate, polyacetate, polymethacrylic resin and the like, in view of close adhesion ability, durability, and wide-range adaptability.

If a base film formed of a resin containing polyethylene terephthalate as a main component is used, the readily adhering layer is desirable formed of polyester resin corresponding to the base film. However, a macro molecule mainly formed of polyethylene terephthalate skeleton is too stiff to achieve a sufficient adhesion. The aliphatic polyester resin achieves good adhesion to the polyethylene terephthalate base and the surface material of an LCD or a CRT. A most preferable material to achieve appropriate stiff flexibility and adhesion is a polyester resin modified so that the secondary transition point becomes 10-50°C by adding a crosslinking component selected from melamine, guanamine, guanidine or polyurea reactable with ester groups or their immediate precursors in the synthesis reactions, that is, hydroxyl groups. The thickness of the readily adhering layer is preferably within a range of 0.1-2 μm. If it is not greater than 0.1 μm, a sufficient adhesiveness is not achieved. A thickness excessive to some extent is not meaningful since the adhesion effect is saturated.

The readily adhering layer may be formed by applying a solution of the polyester and drying it after a polyethylene terephthalate film is produced, or may be formed by in-line simultaneously with the production of a polyethylene terephthalate film. The latter is preferable.

In the present invention, it is preferable to provide an appropriate protective film on the readily adhering layer used as an adhesion surface between the reverse surface and the display front surface of an LCD or a CRT. The first reason for the need to provide a protective film is that when the plastic film is handled in a process of installing it to the display front surface of an LCD or a CRT, occurrence of flaws or staining caused by contact or the like during the process can be prevented by peeling the protective film immediately before the plastic film is attached. The second reason is that occurrence of flaws or staining by contact or the like can be prevented throughout the entire production process of a plastic film having an anti-reflection film according to the present invention by applying the protective film to the reverse surface in as early a step as possible. Thereby, it becomes possible to considerably reduce various measures required for preventing flawing or staining in various steps but bound to sacrifice the productivity, thereby contributing to a great improvement of productivity.

It has been found through considerations in various respects that the peeling strength of the protective film is preferably 3-30 g/2.5 cm in order to achieve the aforementioned purpose. A peeling strength not greater than 3 g/2.5 cm is not preferable since the protective film will likely peel upon simple impact or contact during the production process or handling. A peeling strength equal to or greater than 90 g/2.5 cm is not preferable since peeling in the attaching process will be impeded.

Further, it is preferred that the protective film be free from large changes in tackiness, that is, peeling strength, caused by effect of heat during the production processes. Specifically, the change in the peeling strength of the protective film subjected to heat treatment of maximum 90°C/maximum 60 minutes be within ± 50% of the peeling strength before being affected by the heat treatment. Normally, an amount of a tackiness agent is added to a tacky protective film. Therefore, by heat treatment, that is, by effect of heat in various processes after the protective film is applied to a surface to be protected, the peeling strength is affected by heat and, therefore, changes in various processes, depending on the kind and amount of the tackiness agent component. The tackiness agent component may change in quality to cause problems, such as, difficulty in peeling, debris remaining on the surface layer after the protective layer is peeled, and the like. Further, the tackiness may deteriorate during processes and may peel during processes, causing problems. An anti-reflection film according to the present invention will be placed in an environment at about 50-90°C. It has been found that to meet the aforementioned requirements, a most preferable protective film is, specifically, a film formed by co-extruding a high-density linear polyethylene and a low-density linear or branched polyethylene to a thickness ratio within a range of 6:1 to 1:1, in which film the total thickness is 20-100 μm and the low-density linear or branched polyethylene component side forms a tacky-peeling layer side. A polyethylene-terephthalate film also can be applied.

In the present invention, it is preferable that a hard coat layer having a thickness of 1 μm-15 μm, a scratch resistance, and a pencil hardness of 2H or higher, be provided between the first layer and the plastic film or sheet substrate. This feature is described in detail above.

In the present invention, it is preferable that a water-repellant stain-proof layer normally having a thickness within a range of 1 nm-20 nm and having a pure water contact angle of 90 deg. or greater, be provided on the anti-reflection film. The purpose for this provision is to make the surface resistant to staining even in various use environments, other than the essential purpose of use, when a product according to the present invention is attached to a display surface for use. The purpose can be achieved by providing a water-repellant and oil-repellant coating, considering lipstick, coffee, felt pen ink, mayonnaise as expected staining substances. As a specific film forming method for the water-repellant and oil-repellant coating, various methods can be employed. For example, a method as indicated in Japanese patent application laid-open No. Hei 6-122776 wherein a compound with a low surface energy, such as fluoroalkyl silane, is converted into a macromolecular coating by chemical bonds in the outermost layer surface of the anti-reflection film, may be cited. It is convenient to use a water contact angle as a scale for stain-proof ability. If the water contact angle is 90 deg. or greater, it becomes effective against the aforementioned staining substances, achieving a remarkable stain-proof effect.

As a method for forming an anti-reflection film of many layers as described above, generally-termed vapor deposition methods, that is, a sputtering method, a vapor deposition method employing an electron beam heating technique, an ion plating method and the like may be used. Among these, the vapor deposition method employing the electron beam heating technique is preferred. In the vapor deposition employing the electron beam heating technique or the like, vapor deposition may preferably be performed by activating a vaporized compound through ionization by ion beams during vapor deposition in order to enhance the adhesion of each layer.

For formation of the anti-reflection film, it should be needless to state that the film thickness is extremely important. In practice, it is preferable to perform film formation while monitoring the optical film thickness ($n_i$ x $d_i$ where i = 1-4, $n_i$ is the refractivity of the i-th layer, and $d_i$ is the thickness of the i-th layer) with an optical film thickness meter on line and feeding back the changing measurements in real time into the vapor deposition conditions.

An optical article thus obtained according to the present invention has an intended anti-reflection ability, a preferable electric conductivity, and an appropriate surface hardness resistant to flawing of the surface, and, if a water-repellant coating is provided, a high stain-proof property and, moreover, close adhesiveness, weathering resistance, abrasion resistance and crack-proof property to practically required extents.

The plastic-made optical article having a multi-layer anti-reflection film of the present invention may be effectively applied to a cathode ray tube, a liquid crystal display, and a glass or plastic showcase. The plastic-made optical article having a multi-layer anti-reflection film is adhered to the cathode ray tube, the liquid crystal display or the glass or plastic showcase using a transparent adhesive so that the surface provided with an anti-reflection film becomes the exposed surface. The transparent adhesive is preferably an ultraviolet curing resin adhesive.

As described in detail above, the plastic-made optical article having a multi-layer anti-reflection film of the present invention, having the construction within the scope of the claims, achieves the following remarkable advantages. That is, the plastic-made optical article has characteristics that when attached to a display of various types, the plastic-made optical article considerably reduces reflection of light incident from behind and blocks electromagnetic waves to prevent eye fatigue of a user of the display, and eliminates electromagnetic wave injury or disorder, and have resistant to flawing and surface stain-proofness against hand perspiration or various commodities, and allows easy stain removal. Since the article of the present invention is preferably a film product, it can be attached to various displays having glass surfaces or the like for which direct and low-cost anti-reflection treatment is not easy. Further, in a preferred mode employing a 4-layer construction, the article is a product with good balance between the performance and the production costs, and use of the article achieves economical advantages in industrial respects.

EXAMPLES

Modes of the present invention will be described hereinafter with reference to examples. The invention is not limited by the examples below.

The production conditions and measurement methods common in all the examples below will be described.

The base film used was a 188-μm polyethylene terephthalate (hereinafter, abbreviated as "PET") on which an amorphous polyester-based resin was applied to a thickness of 0.5-0.8 μm in line during film formation. As for the hard coat layer, a film having a pencil hardness of 3H and a thickness of 3.5 μm was formed by applying to one side surface of the PET film, a solution of a polyfunctional acrylate (a mixture of erythritol-based material, a polyester-based material and a hydroxypropyl-based material), a surface lubricating agent (polysiloxane) and a light initiating agent (a phenyl ketone compound) in a toluene-methylethyl ketone mixture solvent, and then drying the applied solution, and irradiating it with UV to complete crosslinking reaction.

In formation of an anti-reflection film, all the four layers were formed by using a continuous wind-up vacuum vapor deposition apparatus using EB (electron gun) heating as a vaporization energy and partially in combination with an RF ion plating method, while the film thickness of each layer was being measured and controlled on the basis of optical film thickness (n x d) on line. ITO film was formed in conditions where after a vacuum degree of $5 \times 10^{-5}$ Torr. was set as a condition, and oxygen was introduced to a oxygen partial pressure of $1.1 \times 10^{-4}$ Torr., and a high frequency (13.56 MHz) at 1.5 KW was applied thereby establishing a plasma atmosphere. $SiO_2$ film was formed in conditions where the oxygen partial pressure was 2.0 x 10-4 Torr. and the high frequency (13.56 MHz) was 0.5 KW.

A water-repellant film was formed by introducing vapor of (heptadecafluoro-1,1,2,2-tetrahydrodecyl)-1-trimethoxy silane into an environment wherein high-frequency plasma of 100 W was generated between discharge electrodes in a vacuum apparatus, and forming a film to a thickness of 5 nm by reaction on a surface of the aforementioned film carrying an anti-reflection film formed by four layers. The contact angles of the resultant products were within the range of 102 degrees to 110 degrees.

EXAMPLE 1

A anti-reflection film formed of the following four layers, that is, the first to fourth layers, was formed by the above-described method on a continuous long film obtained by forming a hard coat layer of 4 μm on one side surface of the 188-μm PET film.

|  | Constituting Substance | Optical film thickness (n x d) |
|---|---|---|
| First layer | ITO | 55 nm |
| Second layer | $SiO_2$ | 40 nm |
| Third layer | ITO | 133 nm |
| Forth layer | $SiO_2$ | 140nm |

The surface hardness of the anti-reflection film of the resultant product was 3H in pencil hardness. After complete black treatment was performed so that reflection from the surface of the product on which the anti-reflection film was not provided would not be observed, reflectivity of the anti-reflection film in a visible light ray range was measured. The visible light ray band in which the reflectivity was 1 % or lower was 280 nm between 440 nm and 720 nm.

EXAMPLE 2

A water-repellant stain-proof layer of about 5 nm in thickness was formed on the anti-reflection film formed on one side surface of the polyester film obtained in Example 1, by introducing vapor of (heptadecafluoro-1,1,2,2-tetrahydrodecyl)-1-tirmethoxy silane into an environment wherein high-frequency plasma of 100 W was generated between discharge electrodes in a vacuum apparatus. The film was attached to a 15-inch CRT using a polyfunctional acryl-based adhesive having a refractivity approximately equal to that of the glass of the CRT, in such a manner that the surface thereof carrying the anti-reflection film/water-repellant stain-proof layer faced out. A personal computer screen on the CRT had considerably reduced reflection (reflected image) of background of an operator. Further, almost no electromagnetic waves were detected on the display front surface. Thereby, it was possible for the operator to continue long-hour operation without feeling tired, with a secured feeling.

EXAMPLE 3

The base film used was a 188-μm polyethylene terephthalate (hereinafter, abbreviated as "PET") on each side of which a polyester resin containing 15% trimethylol melamine in solid weight and having an aliphatic skeleton as a main structure and having a secondary transition point of about 23°C was formed into a film having a thickness of 0.4 μm in line during film format ion. As for the hard coat layer, a film having a pencil hardness of 3H and a thickness of 3.5 μm was formed by applying to one side surface of the PET film, a solution of a polyfunctional acrylate (a mixture of erythritol-based material, a polyester-based material and a hydroxypropyl-based material), a surface lubricating agent (polysiloxane) and a light initiating agent (a phenyl ketone compound) in a toluene-methylethyl ketone mixture solvent, and then drying the applied solution, and irradiating it with UV to complete crosslinking reaction.

In formation of an anti-reflection film, all the four layers were formed in the order of ITO, $SiO_2$, ITO and $SiO_2$ on the hard coat layer by using a continuous wind-up vacuum vapor deposition apparatus using EB (electron gun) heating as a vaporization energy and partially in combination with an RF ion plating method, while the film thickness of each layer was being measured and controlled on the basis of optical film thickness (n x d) on line.

A water-repellant film was formed by vaporizing (heptadecafluoro-1,1,2,2-tetrahydrodecyl)-1-tirmethoxy silane and introducing the vapor into an environment wherein high-frequency plasma of 100 W was generated between discharge electrodes in a vacuum apparatus, and forming a film to a thickness of about 20 angstroms by reaction on a surface of the aforementioned film carrying the anti-reflection film. The contact angle of the resultant product was 108 degrees.

EXAMPLE 4

The plastic film having the anti-reflection film, obtained in Example 3, was adhered to the glass surface of a CRT using an ultraviolet curing acryl-based adhesive. A personal computer screen was displayed thereon and processing operation was performed in the screen on the display. The plastic film having the anti-reflection film could not easily be peeled off although it was forced to peel. The close adhesion strength was sufficiently high 1900 g/25 mm. As a parallel test sample, the plastic film having an anti-reflection film according to the present invention was adhered to a glass plate, and then subjected to a test where environmental conditions of -40 to 60°C and 20 to 98% RH were combined and the test sample was repeatedly held in such environments. No peeling from the glass surface and no peeling between the PET film and the hard coat layer was observed.

EXAMPLE 5

On the anti-reflection film formed on one side surface of the polyester film obtained in Example 3, a water-repellant film having a thickness of about 40 angstroms was formed by introducing vapor of (heptadecafluoro-1,1,2,2-tetrahydrodecyl)-1-tirmethoxy silane into an environment wherein high-frequency plasma of 100 W was generated between discharge electrodes in a vacuum apparatus. The film was attached to a 15-inch CRT using a polyfunctional acryl-based adhesive having a refractivity approximately equal to that of the glass of the CRT, in such a manner that the surface thereof carrying the anti-reflection film/water-repellant stain-proof layer faced out. A personal computer screen on the CRT had considerably reduced reflection (reflected image) of background of an operator. Further, almost no electromagnetic waves were detected on the display front surface. Thereby, it was possible for the operator to continue long-hour operation without feeling tired, with a secured feeling.

EXAMPLE 6

The base film used was a 188-μm polyethylene terephthalate (hereinafter, abbreviated as "PET") on each side of which a polyester resin containing 15% trimethylol melamine in solid weight and having an aliphatic skeleton as a main structure and having a secondary transition point of about 23°C was formed into a film having a thickness of 0.4 μm in line during film formation. As for the hard coat layer, a film having a pencil hardness of 3H and a thickness of 3.5 μm was formed by applying to one side surface of the PET film, a solution of a polyfunctional acrylate (a mixture of erythritol-based material, a polyester-based material and a hydroxypropyl-based material), a surface lubricating agent (polysiloxane) and a light initiating agent (a phenyl ketone compound) in a toluene-methylethyl ketone mixture solvent, and then drying the applied solution, and irradiating it with UV to complete crosslinking reaction.

A protective film of 50 μm in thickness formed by co-extruding a high-density linear polyethylene and a low-density branched polyethylene to a thickness ratio of 3:1 was laminated on the surface on which the anti-reflection film was not formed, using the low-density branched polyethylene component side as an adhesion layer

In formation of an anti-reflection film, all the four layers were formed in the order of ITO, $SiO_2$, ITO and $SiO_2$ on the hard coat layer by using a continuous wind-up vacuum vapor deposition apparatus using EB (electron gun) heating as a vaporization energy and partially in combination with an RF ion plating method, while the film thickness of each layer was being measured and controlled on the basis of optical film thickness (n x d) on line.

A water-repellant film was formed by vaporizing (heptadecafluoro-1,1,2,2-tetrahydrodecyl)-1-tirmethoxy silane and introducing the vapor into an environment wherein high-frequency plasma of 100 W was generated between discharge electrodes in a vacuum apparatus, and forming a film to a thickness of about 20 angstroms by reaction on a surface of the aforementioned film carrying the anti-reflection film. The contact angle of the resultant surface of the product was 108 degrees.

EXAMPLE 7

The plastic film having the anti-reflection film and the protective film on the reverse side, obtained in Example 6, was adhered to the glass surface of a CRT using an ultraviolet curing acryl-based adhesive, after the protective film was peeled off. A personal computer screen was displayed thereon and processing operation was performed in the screen on the display. The plastic film having the anti-reflection film could not easily be peeled off although it was forced to peel. The close adhesion strength was sufficiently high 1800 g/25 mm.

EXAMPLE 8

On the anti-reflection film formed on one side surface of the polyester film obtained in Example 6, a water-repellant film having a thickness of about 40 angstroms was formed by introducing vapor of (heptadecafluoro-1,1,2,2-tetrahydrodecyl)-1-tirmethoxy silane into an environment wherein high-frequency plasma of 100 W was generated between discharge electrodes in a vacuum apparatus. The film was attached to a 15-inch CRT using a polyfunctional acryl-based adhesive having a refractivity approximately equal to that of the glass of the CRT, in such a manner that the surface thereof carrying the anti-reflection film/water-repellant stain-proof layer faced out. A personal computer screen on the CRT had considerably reduced reflection (reflected image) of background of an operator. Further, almost no electromagnetic waves were detected on the display front surface. Thereby, it was possible for the operator to continue long-hour operation without feeling tired, with a secured feeling.

INDUSTRIAL APPLICABILITY

The optical article having a multi-layer anti-reflection film according to the present invention has an intended anti-reflection ability, a preferable electric conductivity, and an appropriate surface hardness resistant to flawing of the surface, and, if a water-repellant coating is provided, a high stain-proof property and, moreover, close adhesiveness, weathering resistance, abrasion resistance and crack-proof property to practically required extents. Therefore, the optical article may be effectively applied to a cathode ray tube, a liquid crystal display, and a glass or plastic showcase.

**Claims**

1. A plastic-made optical article having a multi-layer anti-reflection film, which is a plastic film or sheet wherein an anti-reflection film having a multi-layer film structure having three or more layers is formed in a surface layer of on one side or both sides thereof, and wherein at least two layers that do not neighbor each other are formed of ITO.

2. A plastic-made optical article having a multi-layer anti-reflection film according to claim 1, wherein a surface layer of one side or both sides of a plastic film or sheet substrate is provided with the following layers formed sequentially in the order from the substrate side toward the surface:

   first layer--layer containing ITO (mixture of $In_2O_3$ and $SnO_2$ mixture) as a main component;
   second layer--layer containing $SiO_2$ as a main component;
   third layer--layer containing ITO as a main component; and
   fourth layer--layer containing $SiO_2$ as a main component,

   and wherein the visible light wavelength range band in which the reflectivity of the anti-reflection film surface is equal to or less than 1 % is equal to or greater than 150 nm.

3. A plastic-made optical article having a multi-layer anti-reflection film according to claim 2, characterized in that the optical film thicknesses of the first to fourth layers ($n_i$ x $d_i$ where i = 1-4, $n_i$ is the refractivity of the i-th layer, and $d_i$ = the thickness of the i-th layer) are as follows:

$$0.04\lambda_0 < n_1 d_1 < 0.15\lambda_0$$

$$0.02\lambda_0 < n_2 d_2 < 0.10\lambda_0$$

$$0.10\lambda_0 < n_3 d_3 < 0.30\lambda_0$$

$$0.10\lambda_0 < n_4 d_4 < 0.30\lambda_0$$

where $\lambda_0$ is the designed wavelength ($\lambda_0$ = 450-600 nm).

4. A plastic-made optical article having a multi-layer anti-reflection film according to claim 2 or 3, wherein all of the first to fourth layers are formed by a vapor deposition method based on an electron beam heating method.

5. A plastic-made optical article having a multi-layer anti-reflection film according to any one of claims 1 to 4, wherein the plastic film or sheet substrate is a film substrate of 50-250 $\mu$m in thickness formed from a resin containing polyethylene terephthalate as a main component.

6. A plastic-made optical article having a multi-layer anti-reflection film according to claim 5, characterized in that the anti-reflection film is formed on one side of the film substrate, and that a readily adhering layer of 0.1-2 $\mu$m in thickness is formed on the other side.

7. A plastic-made optical article having a multi-layer anti-reflection film according to claim 6, characterized in that the readily adhering layer is formed from polyester resin.

8. A plastic-made optical article having a multi-layer anti-reflection film according to claim 6 or 7, characterized in that a protective film peelable for use is provided on the readily adhering layer.

9. A plastic-made optical article having a multi-layer anti-reflection film according to claim 8, characterized in that the peeling strength of the protective film is 3-90 g/2.5 cm.

10. A plastic-made optical article having a multi-layer anti-reflection film according to claim 8 or 9, characterized in that the peeling strength of the protective film subjected to heat treatment of maximum 90°C/maximum 60 minutes changes within ± 50% of the peeling strength before being affected by the heat treatment.

11. A plastic-made optical article having a multi-layer anti-reflection film according to any one of claims 8-10, characterized in that the protective film is a film formed by co-extruding a high-density linear polyethylene and a low-density linear or branched polyethylene to a thickness ratio within a range of 6:1 to 1:1, in which film the total thickness is 20-100 $\mu$m and the low-density linear or branched polyethylene component side forms a tacky-peeling layer side.

12. A plastic-made optical article having a multi-layer anti-reflection film according to any one of claims 1-11, characterized in that a hard coat layer having a thickness of 1 $\mu$m-15 $\mu$m, a scratch resistance, and a pencil hardness of 2H or higher, is provided between the first layer and the plastic film or sheet substrate.

13. A plastic-made optical article having a multi-layer anti-reflection film according to any one of claims 1-12, characterized in that a water-repellant stain-proof layer having a pure water contact angle of 90 deg. or greater, is provided on the anti-reflection film.

14. A cathode ray tube, wherein a plastic-made optical article having a multi-layer anti-reflection film defined in any one of claims 1-13 is adhered using a transparent adhesive, in such a manner that the surface on which the anti-reflection film is formed forms an obverse surface.

15. A cathode ray tube according to claim 14, characterized in that the transparent adhesive is an ultraviolet curing resin adhesive.

16. A liquid crystal display, wherein a plastic-made optical article having a multi-layer anti-reflection film defined in any one of claims 1-13 is adhered using a transparent adhesive, in such a manner that the surface on which the anti-reflection film is formed forms an obverse surface.

17. A liquid crystal display according to claim 16, characterized in that the transparent adhesive is an ultraviolet curing resin adhesive.

18. A glass or plastic showcase, wherein a plastic-made optical article having a multi-layer anti-reflection film defined in any one of claims 1-13 is adhered using a transparent adhesive, in such a manner that the surface on which the anti-reflection film is formed forms an obverse surface.

19. A glass or plastic showcase according to claim 18, characterized in that the transparent adhesive is an ultraviolet curing resin adhesive.

## INTERNATIONAL SEARCH REPORT

| | International application No. |
|---|---|
| | PCT/JP97/00072 |

**A. CLASSIFICATION OF SUBJECT MATTER**

Int. Cl$^6$  G02B1/10

According to International Patent Classification (IPC) or to both national classification and IPC

**B. FIELDS SEARCHED**

Minimum documentation searched (classification system followed by classification symbols)

Int. Cl$^6$  G02B1/10

Documentation searched other than minimum documentation to the extent that such documents are included in the fields searched

| | |
|---|---|
| Jitsuyo Shinan Koho | 1971 – 1995 |
| Kokai Jitsuyo Shinan Koho | 1971 – 1996 |
| Toroku Jitsuyo Shinan Koho | 1994 – 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP, 6-34801, A (Fuji Photo Optical Co., Ltd.),<br>February 10, 1994 (10. 02. 94),<br>Page 3, left column, lines 7 to 47<br>(Family: none) | 1 – 2<br>3 |
| Y | JP, 5-323101, A (Kuraray Co., Ltd.),<br>December 7, 1993 (07. 12. 93),<br>Page 2, right column, line 9 to page 3, left<br>column, line 20; page 3, left column, line 32<br>to right column, line 30 (Family: none) | 1-2, 3-5 |
| Y | JP, 5-134102, A (Kuraray Co., Ltd.),<br>May 28, 1993 (28. 05. 93),<br>Page 2, right column, line 31 to page 3, left<br>column, line 46; page 3, right column, lines 12<br>to 48 (Family: none) | 1-2, 3-7 |
| X<br>Y<br>A | JP, 61-168899, A (Nippon Sheet Glass Co., Ltd.),<br>July 30, 1986 (30. 07. 86),<br>Page 2, upper left column, line 9 to upper<br>right column, line 7; page 2, lower right | 1<br>2<br>3 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| April 14, 1997 (14. 04. 97) | April 22, 1997 (22. 04. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

| International application No. |
| --- |
| PCT/JP97/00072 |

C (Continuation).  DOCUMENTS CONSIDERED TO BE RELEVANT

| Category* | Citation of document, with indication, where appropriate, of the relevant passages | Relevant to claim No. |
| --- | --- | --- |
| | column, line 11 to page 3, upper left column, line 12 (Family: none) | |
| Y | JP, 4-251801, A (Olympus Optical Co., Ltd.), September 8, 1992 (08. 09. 92), Page 2, right column, line 40 to page 3, right column, line 33 (Family: none) | 1 - 2 |
| Y | JP, 1-309003, A (Toray Industries, Inc.), December 13, 1989 (13. 12. 89), Page 1, lower left column, lines 4 to 9 (Family: none) | 1-2, 12-13 |
| Y | JP, 63-228101, A (Nippon Sheet Glass Co., Ltd.), September 22, 1988 (22. 09. 88), Page 1, lower left column, lines 6 to 13 (Family: none) | 1-2, 12-13 |
| A | JP, 7-26223, A (Dainippon Printing Co., Ltd.), January 7, 1995 (27. 01. 95), Page 2, left column, lines 2 to 6 (Family: none) | 6 |
| P | JP, 8-304602, A (Sony Corp.), November 22, 1996 (22. 11. 96)(Family: none) | 1, 5-6, 14 |

Form PCT/ISA/210 (continuation of second sheet) (July 1992)